# EUROPEAN PATENT APPLICATION

(11) **EP 1 862 203 A1**
(43) Date of publication of application: **05.12.2007**
(21) Application number: 06712092.3
(22) Date of filing: 20.01.2006
(51) Int. Cl.: A63F 13/10, A63F 13/12, H04L 9/32

(54) **NETWORK SYSTEM, SERVER DEVICE, UNAUTHORIZED USE DETECTING METHOD, RECORDING MEDIUM, AND PROGRAM**

(30) Priority: 24.01.2005 JP 2005015505
(71) Applicant: Konami Digital Entertainment Co., Ltd., Minato-ku Tokyo 107-8324 (JP)
(72) Inventor: SATO, Ryo, c/o Konami Digital Enternainment Co., Ltd., Minato-ku, Tokyo 107-8324 (JP); MORI, Shoji, c/o Konami Digital Enternainment Co., Ltd., Minato ku, Tokyo 107-8324 (JP); TAKAHASHI, Hidehisa, c/o Konami Digital Enternainment Co., Ltd., Minato-ku, Tokyo 107-8324 (JP); KURI, Koji, c/o Konami Digital Enternainment Co., Ltd., Minato-ku, Tokyo 107-8324 (JP)
(74) Representative: Rüger, Barthelt & Abel Patentanwälte
(86) International application number: PCT/JP2006/300867
(87) International publication number: WO 2006/077976

(57) **Abstract**

A log-in information receiving unit (203) receives log-in information sent from a terminal (13). A user authentication unit (204) authenticates a user based on the relationship between to-be-authenticated information included in the log-in information and authentication information stored in an authentication information storage unit (201). When the user is authenticated, unique information included in the log-in information is stored in a historical information storage unit (202). A terminal authentication unit (205) authenticates the terminal (13) based on the history of the unique information stored in the historical information storage unit (202). When different pieces of unique information have amounted to ten pieces then, for example, the terminal authentication unit (205) detects an unauthorized use by a third party.

## Description

### Technical Field

The present invention relates to a network system, a server device, an unauthorized use detecting method, a recording medium and a program which are suitable for adequately preventing an unauthorized use by a third party while enhancing the flexibility of authorized users.

### Background Art

Recently, network games (on-line games) using a network, such as the Internet, have become popular. This network game is of a type which is played by individual users cooperating with or battling against one another, with a plurality of user terminals connected over a network.
Such a network game becomes usable as its game program is installed on a terminal, such as a personal computer. At that time, to permit only authorized users to install the game program, unique product keys are distributed as needed. Unless the correct product key is input at the time of installation, the installation does not proceed and is interrupted (the installation will not be completed).

If the product key is known to a third party, however, a user who is not authorized (unauthorized user) is permitted to perform installation. If information, such as a product key, ID or password, is leaked to unspecified multiple persons over a network or the like, particularly, multiple unauthorized users can install the game program onto their terminals to use the network game.
Recently, therefore, a scheme of license authentication (activation) is introduced so that a game program cannot be executed from hardware (user terminal) or the essential functions of the game cannot be used unless the hardware has been properly registered using a product key.

As one example of this type of game, the technology of a game system capable of displaying a message to a user's terminal for an adequate time is disclosed (e.g., see Patent Document 1).
Patent Document 1: Unexamined Japanese Patent Application KOKAI Publication No. 2003-144758 (pp. 6-8, FIG. 1)

### Disclosure of Invention

### Problem to be Solved by the Invention

As described above, the use of license authentication can prevent a third party from using a network game in an unauthorized manner. That is, the network game can be used in an authenticated manner only from a specific terminal registered by an authorized user.
In the present situation, however, it is often a case that a single user has a plurality of terminals, so that permitting an authorized use only to a specific terminal is too restrictive, fully denying an authorized user of flexible use.
In a case of an authorized user who has a desk-top personal computer and a notebook personal computer, the user may quietly enjoy a network game using the desk-top personal computer sited in the user's room or may bring the notebook personal computer into a friend's room and enjoy a network game with the friend.

To fulfill such a desire of an authorized user, a predetermined number of license authentications equal to or greater than 2 may be allowed for a single product key.
However, merely increasing the number of terminals to be license-authenticated may permit license authentication or the like by a third party when the product key or the like is leaked as mentioned above. That is, as the flexibility of an authorized user is increased, the chance of unauthorized usage by a third party is increased accordingly.
Accordingly, there is a demand for a technique of preventing an unauthorized use by a third party while enhancing the flexibility of authorized users.

The present invention has been made to overcome the problem, and it is an object of the invention to provide a network system, a server device, an unauthorized use detecting method, a recording medium and a program, which can adequately prevent an unauthorized use by a third party while enhancing the flexibility of authorized users.
Means for Solving the Problem

A network system according to the first aspect of the invention is a network system in which a terminal to be used by a user and a server device that authenticates the terminal are connected together in a communicatable manner, and which is configured as follows.

The terminal device includes a unique information storage unit, an information accepting unit, a request information generating unit, and a request information transmitting unit.
The unique information storage unit stores unique information (e.g., product key and MAC address or the like) for identifying at least the local terminal device. The information accepting unit accepts to-be-authenticated information (e.g., user ID and password or the like) to be used in authenticating the user. The request information generating unit generates access request information (e.g., log-in information or the like) including the accepted to-be-authenticated information and the stored unique information. The request information transmitting unit transmits the generated access request information to the server device.

The server device includes an authentication information storage unit, a history storage unit, a request information receiving unit, a user authentication unit, a history update unit, an unauthorized use detecting unit, and an access permission unit.
The authentication information storage unit prestores authentication information (e.g., user ID and password or the like) for authenticating the user. The history storage unit stores a history of plural pieces of unique information in association with the user. The request information receiving unit receives the access request information sent from the terminal device. The user authentication unit authenticates the user based on a relationship between the to-be-authenticated information included in the received access request information and the stored authentication information.
The history update unit adds the unique information included in the authenticated access request information of the user to the stored authentication information and stores resultant information. The unauthorized use detecting unit detects an unauthorized use based on the history of the unique information stored in association with the user. The access permission unit permits access made by the authenticated user from the terminal device when the unauthorized use is not detected.

A history of different pieces of unique information, for example, is stored in the history storage unit of the server device. When different pieces of unique information have amounted to ten pieces, for example, the unauthorized use detecting unit detects occurrence of an unauthorized use by a third party. That is, when a user ID and password or the like and leaked, resulting in an unauthorized use by unspecified multiple persons, terminal devices to be used would be quite different. So would be their unique information. Accordingly, an unauthorized use can be detected from the history of such pieces of unique information which are all different from one another.
There may be a case where an authorized user uses a plurality of terminal devices, even in which case the quantity should not be amounted to ten pieces within the range of personal use, so that an unauthorized use cannot be detected. That is, an authorized user can access from different terminal devices within the range of personal use.

As a result, it is possible to adequately prevent an unauthorized use by a third party while enhancing the flexibility of authorized users.

The terminal device may further include a unique information generating unit that generates unique information based on at least specific information (e.g., product key or the like) presented to the user beforehand and predetermined hardware information (e.g., MAC address or the like) of the local terminal device, and
the unique information storage unit may store the unique information generated before accessing the server device.

In the server device, the history storage unit may store different pieces of unique information user by user, and
the unauthorized use detecting unit may detect an unauthorized use when the number of different pieces of unique information reaches a specified number (e.g., ten pieces).

In the server device, the history storage unit may store a specified number (e.g., ten pieces) of pieces of unique information user by user, and
the unauthorized use detecting unit may detect an unauthorized use when all of the specified number of pieces of unique information different from one another.

The server device may further include:
a multiple-access detecting unit that detects multiple accesses from the authenticated user; and
an access control unit that disconnects the target terminal device when the multiple accesses are detected.

A server device according to the second aspect of the invention includes an authentication information storage unit, a history storage unit, a request information receiving unit, a user authentication unit, a history update unit, an unauthorized use detecting unit, and an access permission unit, and is configured as follows.

The authentication information storage unit prestores authentication information (e.g., user ID and password or the like) for authenticating a user. The history storage unit stores a history of plural pieces of unique information (e.g., product key and MAC address or the like) to be used in identifying at least a terminal device which is used by the user. The request information receiving unit receives an access request information (e.g., log-in information or the like) including to-be-authenticated information (e.g., user ID and password or the like) and unique information and sent from terminal device. The user authentication unit authenticates the user based on a relationship between the to-be-authenticated information included in the received access request information and the stored authentication information.

The history update unit adds the unique information included in the authenticated access request information of the user to the stored authentication information and stores resultant information. The unauthorized use detecting unit detects an unauthorized use based on the history of the unique information stored in association with the user. The access permission unit permits access made by the authenticated user from the terminal device when the unauthorized use is not detected.

A history of different pieces of unique information, for example, is stored in the history storage unit of the server device. When different pieces of unique information have amounted to ten pieces, for example, the unauthorized use detecting unit detects occurrence of an unauthorized use by a third party.
There may be a case where an authorized user uses a plurality of terminal devices, but an unauthorized use cannot be detected within such a range of personal use.

As a result, it is possible to adequately prevent an unauthorized use by a third party while enhancing the flexibility of authorized users.

An unauthorized use detecting method according to the third aspect of the invention uses an authentication information storage unit (that stores authentication information for authenticating a user), and a history storage unit (that stores a history of plural pieces of unique information to be used in identifying at least a terminal device which is used by the user), and includes a request information receiving step, a user authentication step, a history update step, an unauthorized use detecting step, and an access permission step, and is configured as follows.

In the request information receiving step, an access request information (e.g., log-in information or the like) including to-be-authenticated information (e.g., user ID and password or the like) and unique information (e.g., product key and MAC address or the like) and sent from terminal device is received. In the user authentication step, the user is authenticated based on a relationship between the to-be-authenticated information (e.g., user ID and password or the like) included in the received access request information and the stored authentication information.

In the history update step, the unique information included in the authenticated access request information of the user is added to the stored authentication information and resultant information is stored. In the unauthorized use detecting step, an unauthorized use is detected based on the history of the unique information stored in association with the user. In the access permission step, of permitting access made by the authenticated user from the terminal device when the unauthorized use is not detected.

A history of different pieces of unique information, for example, is stored in the history storage unit. When different pieces of unique information have amounted to ten pieces, for example, occurrence of an unauthorized use by a third party is detected in the unauthorized use detecting step.
There may be a case where an authorized user uses a plurality of terminal devices, but an unauthorized use cannot be detected within such a range of personal use.

As a result, it is possible to adequately prevent an unauthorized use by a third party while enhancing the flexibility of authorized users.

A program according to the fourth aspect of the invention is configured so as to allow a computer (including a game device) to function as the server device.

This program can be recorded in a computer readable information recording medium, such as a compact disk, a flexible disk, a hard disk, a magneto-optical disk, a digital video disk, a magnetic tape or a semiconductor memory.

The program can be distributed and sold, independently of a computer which executes the program, over a computer communication network. The information recording medium can be distributed and sold, independently of the computer.

### Effect of the Invention

According to the present invention, it is possible to adequately prevent an unauthorized use by a third party while enhancing the flexibility of authorized users.

### Brief Description of Drawings

[FIG. 1] An exemplary diagram illustrating the schematic configuration of a game system according to an embodiment of the present invention.
[FIG. 2] An exemplary diagram illustrating the schematic configuration of a game device according to the embodiment of the present invention.
[FIG. 3] An exemplary diagram illustrating the schematic configuration of an authentication server according to the embodiment of the present invention.
[FIG. 4A] An exemplary diagram showing one example of authentication information.
[FIG. 4B] An exemplary diagram showing one example of unique information or the like.
[FIG. 4C] An exemplary diagram showing one example of status information.
[FIG. 5] An exemplary diagram illustrating the schematic configuration of a game server according to the embodiment of the present invention.
[FIG. 6] An exemplary diagram showing one example of network information or the like to be stored in a network information storage unit.
[FIG. 7] An exemplary diagram illustrating the schematic configuration of a terminal according to the embodiment of the present invention.
[FIG. 8A] A flowchart illustrating the flow of a log-in process that is executed by the terminal.
[FIG. 8B] A flowchart illustrating the flow of an authentication process that is executed by the authentication server.
[FIG. 9] A flowchart illustrating the flow of a multi-access checking process that is executed by the game server.
[FIG. 10] An exemplary diagram illustrating the schematic configuration of an authentication server according to another embodiment of the present invention.
[FIG. 11] An exemplary diagram showing one example of another unique information or the like.
[FIG. 12] An exemplary diagram illustrating the schematic configuration of an authentication server according to a further embodiment of the present invention.
[FIG. 13] An exemplary diagram illustrating the schematic configuration of a game server according to another embodiment of the present invention.

### Description of Reference Numerals

- 11, 21, 31: authentication server
- 12, 32: game server
- 13: terminal
- 100: game device
- 101: CPU
- 102: ROM
- 103: RAM
- 104: interface
- 105: controller
- 106: external memory
- 107: DVD-ROM drive
- 108: image processor
- 109: sound processor
- 110: NIC
- 201: authentication information storage unit
- 202, 801: historical information storage unit
- 203: log-in information receiving unit
- 204, 802: user authentication unit
- 205, 803: terminal authentication unit
- 206: status information storage unit
- 207, 901: log-in determining unit
- 208, 902: propriety information transmitting unit
- 209: network information transmitting unit
- 210: multi-access information receiving unit
- 211: inhibition time setting unit
- 301: network information receiving unit
- 302: registration unit
- 303: multi-access information transmitting unit
- 304: network information storage unit
- 305, 913: warning information transmitting unit
- 306: filter unit
- 307: game processor
- 308: game information transmitting unit
- 401: unique information generating unit
- 402: unique information storage unit
- 403: operational input receiving unit
- 404: log-in information generating unit
- 405: log-in information transmitting unit
- 903: encryption key information receiving unit
- 904: encryption key information storage unit
- 911: encrypted data receiving unit 911
- 912: decryption unit 912
- 914: encrypted information storage unit
- 915: encryption key information generating unit
- 916: encryption key information transmitting unit

### Best Mode for Carrying Out the Invention

An embodiment of the present invention will be described below. While the following describes an embodiment in which the invention is adapted to a game device for the ease of understanding, the invention can also be adapted to information processing apparatuses, such as various computers, PDA and cellular phone. That is, the embodiment to be described below is given by way of illustration only, and does not limit the scope of the invention. Therefore, those skilled in the art can employ embodiments in which the individual elements or all the elements are replaced with equivalent ones, and which are also encompassed in the scope of the invention.

### (First Embodiment)

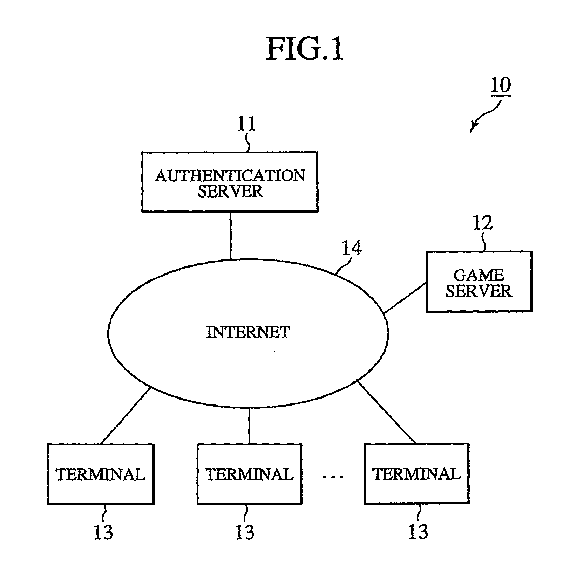

FIG. 1 is an exemplary diagram illustrating the schematic configuration of a game system 10 according to an embodiment of the present invention.
In the game system 10, an authentication server 11 and a game server 12 are arranged on an Internet 14. Individual terminals 13 (terminals 13 which are used by the same user or different users) in the game system 10 are connected over the Internet 14 to the authentication server 11 and the game server 12 in a communicatable manner.
The terminals 13 can communicate with one another by the so-called peer-to-peer communication technique. For easier understanding, a game device connectable to the Internet will be described hereinbelow as an example of the terminal 13.

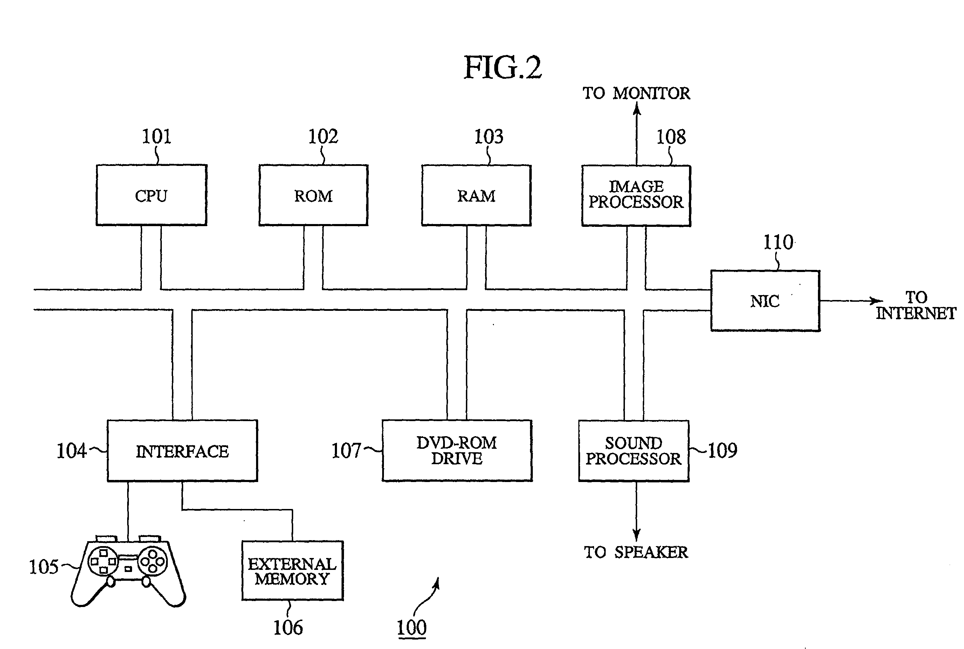

FIG. 2 is an exemplary diagram illustrating the schematic configuration of a game device 100 which functions as the terminal 13 according to the embodiment. A description will be given hereinbelow referring to the diagram.

The game device 100 has a CPU (Central Processing Unit) 101, a ROM (Read Only Memory) 102, a RAM (Random Access Memory) 103, an interface 104, a controller 105, an external memory 106; a DVD (Digital Versatile Disk)-ROM drive 107, an image processor 108, a sound processor 109, an NIC (Network Interface Card) 110.

As a DVD-ROM storing a program and data for a game is loaded into the DVD-ROM drive 107 and the game device 100 is powered on, the program is executed to realize the terminal 13 of the embodiment.

The CPU 101 controls the general operation of the game device 100, and is connected to individual components to exchange a control signal and data therewith.

An IPL (Initial Program Loader) which is executed immediately after power-on is recorded in the ROM 102. As the IPL is executed, the program recorded in the DVD-ROM is read into the RAM 103 and is executed by the CPU 101. Recorded in the ROM 102 are a program for the operating system needed for the general operational control of the game device 100 and various kinds of data.

The RAM 103 temporarily stores data and a program. The program and data read from the DVD-ROM, and other data needed for progressing a game and chat communication is held in the RAM 103.

The controller 105 connected via the interface 104 accepts an operation input which is made when a user executes the game. For example, the controller 105 accepts an input, such as a string of characters (message), according to the operation input.

Data indicative of the progress status of the game, data of the log (record) of the chat communication and the like are stored in a rewritable manner in the external memory 106 connected detachably via the interface 104. As the user makes an instruction input via the controller 105, those data can adequately be recorded in the external memory 106.

The program for realizing the game and image data and sound data accompanying the game are recorded in the DVD-ROM to be loaded into the DVD-ROM drive 107. Under the control of the CPU 101, the DVD-ROM drive 107 performs a process of reading from the DVD-ROM loaded therein to read a necessary program and data which are temporarily stored in the RAM 103 or the like.

The image processor 108 processes data read from the DVD-ROM by means of the CPU 101 and an image operation processor (not shown) the image processor 108 has, and then records the data in a frame memory (not shown) in the image processor 108. The image information recorded in the frame memory is converted to a video signal at a predetermined synchronous timing, which is in turn output to a monitor (not shown) connected to the image processor 108. This can ensure various image displays.

The image operation processor can enable fast execution of an overlay operation of a two-dimensional image, a transparent operation like α blending, and various kinds of saturation operations.
It is also possible to enable fast execution of an operation of rendering polygon information which is arranged in virtual three-dimensional space and to which various kinds of texture information is added, by a Z buffer scheme to acquire an rendered image with a downward view of a polygon, arranged in the virtual three-dimensional space, from a predetermined view point position.

Further, as the CPU 101 and the image operation processor cooperate to be able to write a string of characters as a two-dimensional image in the frame memory or on each polygon surface according to font information which defines the shapes of characters. While the font information is recorded in the ROM 102, exclusive font information recorded in the DVD-ROM can be used as well.

The sound processor 109 converts sound data read from the DVD-ROM to an analog sound signal, and outputs the sound signal from a speaker (not shown) connected to the sound processor 109. Under the control of the CPU 101, the sound processor 109 generates effect sounds and music data to be generated during progress of the game, and outputs sounds corresponding thereto from the speaker.

The NIC 110 serves to connect the game device 100 to a computer communication network (not shown), such as the Internet. The NIC 110 includes an analog modem according to the 10 BASE-T/100 BASE-T standard which is used at the time of constructing a LAN (Local Area Network) or to be connected to the Internet using a telephone circuit, an ISDN (Integrated Services Digital Network) modem, an ADSL (Asymmetric Digital Subscriber Line) modem, a cable model to connect to the Internet using a cable television circuit, or the like, and an interface (not shown) which intervenes between those modems and the CPU 101.

In addition, the game device 100 may be configured so as to achieve the same functions as the ROM 102, the RAM 103, the external memory 106, and the DVD-ROM or the like which is to be loaded into the DVD-ROM drive 107 by using a large-capacity external storage device, such as a hard disk.
It is also possible to employ a mode of connecting to a keyboard for receiving an edition input of a character string from the user, a mouse or the like for receiving designation of various positions and a selective input therefrom.

An ordinary computer (general-purpose personal computer or the like) can be used as the terminal 13 in place of the game device 100 of the embodiment. For example, the ordinary computer, like the game device 100, has a CPU, RAM< ROM, DVD-ROM drive and NIC, has an image processor having simpler functions than the game device 100, and can use a flexible disk, magneto-optical disk, a magnetic tape or the like in addition to a hard disk as an external storage device. The keyboard, mouse or the like, not a controller, is used as an input device. As the game program is executed after installation thereof, the computer serves as the terminal 13.

In a network game, such a general computer (such as a general-purpose personal computer) is often used in place of a game only device. A description will be given of the terminal 13 hereinbelow with reference to the game device 100 shown in FIG. 2 unless otherwise specified. The elements of the game device 100 can be replaced with the elements of a general computer as needed, and those embodiments are encompassed in the scope of the invention.

While the authentication server 11 and game server 12 are realized on a general computer, a predetermined game device 100 in a group of game devices 100 can be used as the authentication server 11 and game server 12. The authentication server 11 and the general computer do not differ much from each other in the configuration and functions. That is, the authentication server 11 and game server 12 of the invention can be realized by the game device 100.

### (Schematic Configuration of Authentication Server)

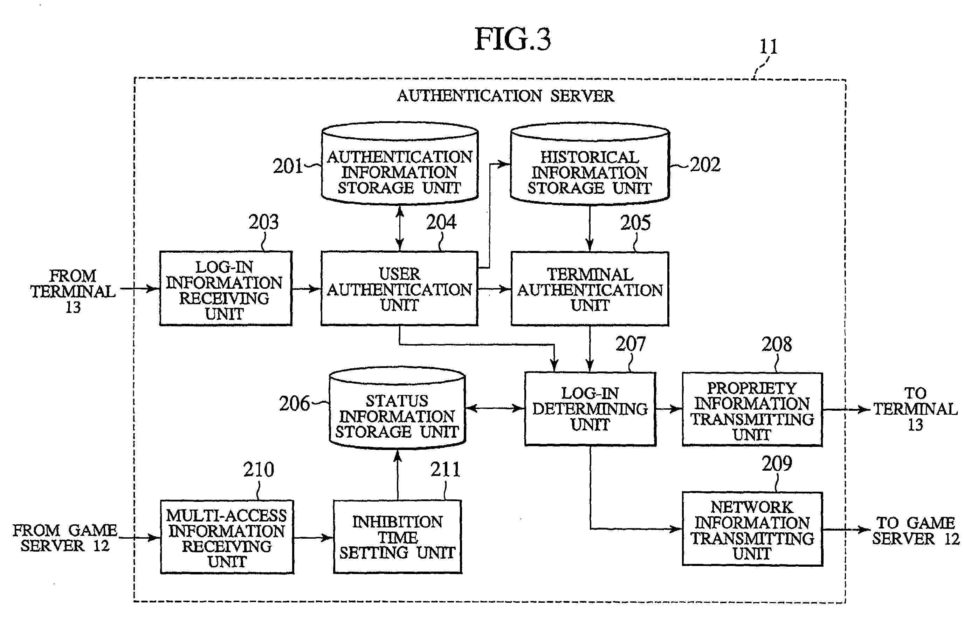

FIG. 3 is an explanatory diagram showing the schematic configuration of the authentication server 11 according to the embodiment, which will be described below referring to the diagram.

The authentication server 11 has an authentication information storage unit 201, a historical information storage unit 202, a log-in information receiving unit 203, a user authentication unit 204, a terminal authentication unit 205, a status information storage unit 206, a log-in determining unit 207, a propriety information transmitting unit 208, a network information transmitting unit 209, a multi-access information receiving unit 210, and an inhibition time setting unit 211.

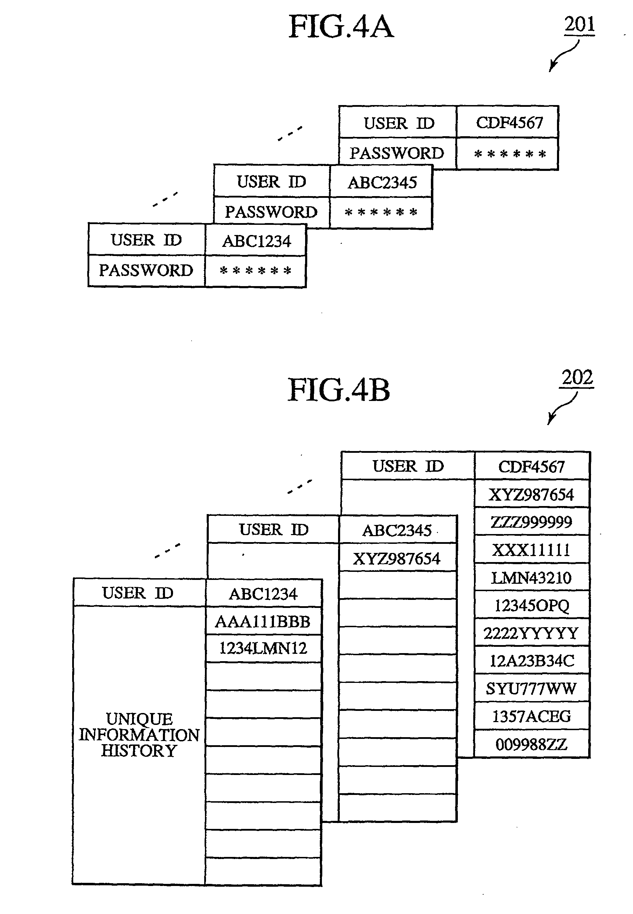

First, the authentication information storage unit 201 prestores authentication information to authenticate a user.
For example, as shown in FIG. 4A, the authentication information storage unit 201 stores authentication information comprised of a user ID, a password, etc. The user ID and the password in the diagram are set at the time of registration of user information, which is carried out beforehand, and are compared with log-in information to be sent from the terminal 13 (the user ID and password included in the log-in information) at the time of a later log-in.

The historical information storage unit 202 stores the history (historical information) of unique information of the authenticated terminal 13. Inherent information differs from one terminal 13 to another. In a case of installing a game program, unique information differs every time installation is performed even for the same terminal 13, as will be described later.
For example, the historical information storage unit 202 stores the unique information of the terminal 13 included in the log-in information when it is authenticated, as shown in FIG. 4B. As illustrated, the historical information storage unit 202 properly stores unique information for distinguishing the authenticated terminal 13. Specifically, same unique information as the one stored is not stored, so that only different unique information remains as a history.

Returning to FIG. 3, the log-in information receiving unit 203 receives log-in information sent from the terminal 13. This log-in information includes, for example, a user ID, a password and unique information.
That is, the log-in information receiving unit 203 receives log-in information including the user ID and password input by the user at the terminal 13, and unique information (e.g., product key and MAC address or the like) generated from the terminal 13.

The user authentication unit 204 authenticates the user by adequately comparing the log-in information received by the log-in information receiving unit 203 with authentication information stored in the authentication information storage unit 201.
For example, the user authentication unit 204 determines whether or not a set of a user ID and password included in log-in information matches with any authentication information (set of a user ID and password) shown in FIG. 4A. When there is no match, the user authentication unit 204 notifies the log-in determining unit 207 of the user ID or the password being wrong.
When there is a match, on the other hand, the user authentication unit 204 authenticates the user (log-in information) and stores the unique information included in the authenticated log-in information into the historical information storage unit 202 shown in FIG. 4B. That is, plural pieces of unique information are stored in the historical information storage unit 202 as a history for each user ID.

When the user is authenticated, the terminal authentication unit 205 authenticates the terminal 13 based on the history of unique information of the user stored in the historical information storage unit 202.
When the unique information (history corresponding to the user ID) shown in FIG. 4B has not amounted to ten pieces, for example, the terminal authentication unit 205 authenticates the terminal 13. That is, when different pieces of unique information have not amounted to ten pieces, the terminal 13 is authenticated.
When different pieces of unique information have amounted to ten pieces, on the other hand, the terminal authentication unit 205 detects that an unauthorized use by a third party has occurred, and does not authenticate the terminal 13.
That is, when the user ID and password or the like have leaked to be used by unspecified multiple persons, terminals 13 to be used would be quite different. So would be their unique information. Accordingly, an unauthorized use is detected from the history of such unique information.
There may be a case where an authorized user uses a plurality of terminals 13, even in which case the quantity should be no more than 5 to 6 within the range of personal use. That is, it is hardly a case that an authorized user would use ten terminals 13 switching from one to another in order. In this respect, the state where different pieces of unique information have amounted to ten pieces is well beyond the range of personal use and is very unnatural. Therefore, the terminal authentication unit 205 can detect an unauthorized use by a third party from such unnatural historical information.

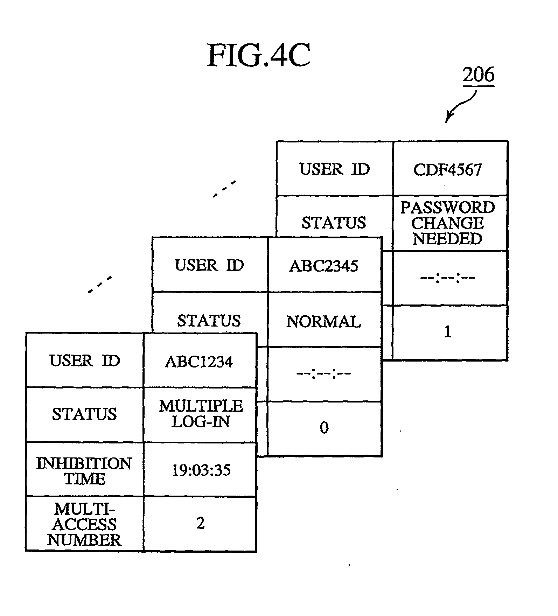

The status information storage unit 206 stores status information indicating a present management status (valid status or invalid status) for each user (user ID).
For example, the status information storage unit 206 stores status information as shown in FIG. 4C. The status information includes information of a user ID, a status, an inhibition time, the multi-access number, etc.
The status in the diagram is information indicating the status or the like of each user which is managed; for example, "normal", "multi-access", "password change needed", etc. are adequately set. Herein, the "multi-access" is set when the game server 12 to be described later detects multi-access (multiple registration) with the same user ID. The "password change needed" is set when all pieces of unique information in the historical information storage unit 202 differ so that an unauthorized use by a third party is detected as mentioned above.
The inhibition time in the diagram indicates the time at which a log-in inhibition status is maintained (the end of the time for inhibiting log-in), and is set together with the "multi-access". The multi-access number in the diagram indicates the number of times the "multiple accesses" is set and is sequentially counted up from the initial value of 0. As will be described later, inhibition times different in length to the end are properly set according to the multi-access number.

Returning to FIG. 3, the log-in determining unit 207 finally determines if the log-in is appropriate based on the results of authentication from the user authentication unit 204 and the terminal authentication unit 205, and the result of reference to the status information storage unit 206.
Even when the user is authenticated by the user authentication unit 204 and the terminal is authenticated by the terminal authentication unit 205, the log-in determining unit 207 finally determines the log-in by referring to the status information stored in the status information storage unit 206.
In a case where the status is "multi-access" and the inhibition time is set at the time of referring to the status information of the user (user ID), the log-in determining unit 207 denies the log-in considering that the user is invalid when the inhibition time has not passed.
Even when the status is "password change needed", the log-in determining unit 207 denies the log-in considering it as an invalid state. When an authorized user sets a new password, the status is changed to "normal".
When the inhibition time has passed even if the status is "multi-access", the log-in determining unit 207 permits the log-in considering that the user is valid. When the status is "normal", the log-in determining unit 207 permits the log-in also considering that the user is valid.

When the user is not authenticated by the user authentication unit 204 or when the terminal is not authenticated by the terminal authentication unit 205, the log-in determining unit 207 denotes the log-in.
When the terminal is not authenticated by the terminal authentication unit 205 (i.e., when an unauthorized use by a third party is detected), the log-in determining unit 207 sets the aforementioned "password change needed" to the target status information (status) in the status information storage unit 206.

The propriety information transmitting unit 208 sends information indicating the appropriateness of the log-in based on the result of determination from the log-in determining unit 207.
When the log-in determining unit 207 permits the log-in, for example, the propriety information transmitting unit 208 returns log-in permission information to the terminal 13 and switches the access destination of the terminal 13 to the game server 12.
When the log-in is not permitted, on the other hand, the propriety information transmitting unit 208 returns log-in denial information to the terminal 13. When the user is not authenticated due to a difference in password or the like, for example, the propriety information transmitting unit 208 sends the terminal 13 log-in denial information including a message that the password or the like differs. When the terminal 13 is not authenticated, the propriety information transmitting unit 208 sends the terminal 13 log-in denial information including a message that unauthorized use is detected so that the user ID will be stopped until the password is changed.

When the log-in determining unit 207 permits the log-in, the network information transmitting unit 209 sends the network information or the like of the terminal 13 to the game server 12.
For example, the network information transmitting unit 209 sends network information, such as the IP address and port, of the terminal 13 to the game server 12 together with the authenticated user ID.

The multi-access information receiving unit 210 receives multi-access information sent from the game server 12. The multi-access information is sent from the game server 12 when a multi-access with the same user ID is detected in the game server 12. The multi-access information includes information of the user ID whose multi-access is detected or the like.

The inhibition time setting unit 211 sets the inhibition time or the like to the status information (status information of the target user ID) shown in FIG. 4C based on the multi-access information received by the multi-access information receiving unit 210.
That is, the inhibition time setting unit 211 sets "multi-access" in the status using the status information corresponding to the user ID included in the multi-access information, counts up the multi-access number, then sets the inhibition time corresponding to the multi-access number. When the multi-access number is "1" (in the case of the first multi-access), for example, the inhibition time setting unit 211 acquires the time of 10 minutes after the present time, and sets the acquired time as the inhibition time. When the multi-access number is "2", the inhibition time setting unit 211 sets the time of 20 minutes after the present time, and when the multi-access number is "3", the inhibition time setting unit 211 sets the time of 30 minutes after the present time. The relationship between the multi-access number and the inhibition time is not limited to that relationship, and is optional; in principle, as the multi-access number increases, the inhibition time is set longer.

### (Schematic Configuration of Game Server)

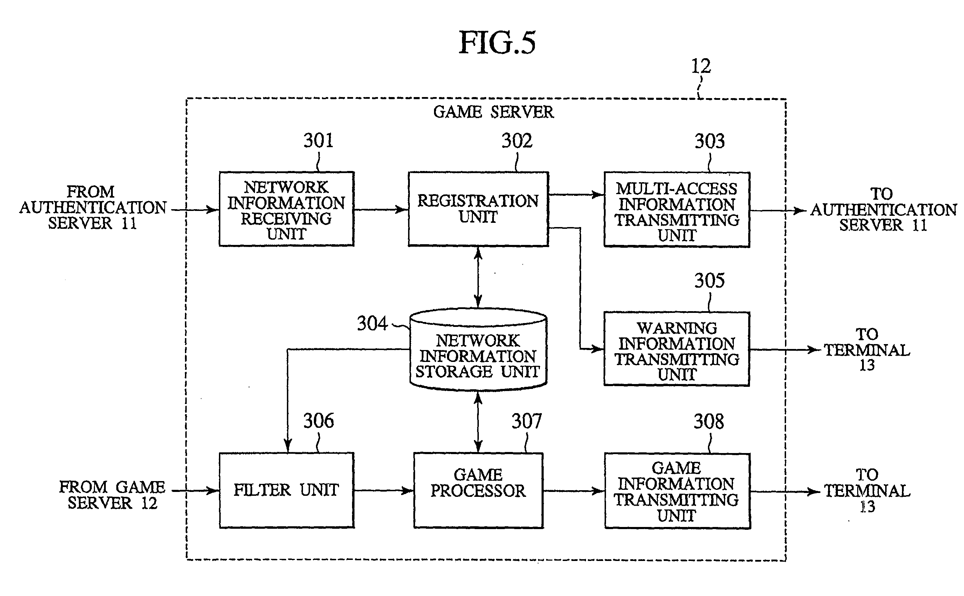

FIG. 5 is an explanatory diagram showing the schematic configuration of the game server 12 according to the embodiment, which will be described below referring to the diagram.

The game server 12 has a network information receiving unit 301, a registration unit 302, a multi-access information transmitting unit 303, a network information storage unit 304, a warning information transmitting unit 305, a filter unit 306, a game processor 307, and a game information transmitting unit 308.

The network information receiving unit 301 receives network information or the like sent from the authentication server 11.
That is, the network information receiving unit 301 receives information including the IP address and port of the terminal 13 used by the user authenticated by the authentication server 11, and the user ID of the user.

The registration unit 302 registers the network information or the like, received by the network information receiving unit 301, into the network information storage unit 304.
For example, the registration unit 302 stores the user ID and network information in the network information storage unit 304 in association with each other. At this time, the registration unit 302 verifies if the user ID is multi-used to attempt to detect a multi-access. That is, when the user ID to be registered is already registered in the network information storage unit 304 (is currently accessing), the registration unit 302 detects a multi-access (multiple registration) with the user ID. When detecting a multi-access, the registration unit 302 causes the multi-access information transmitting unit 303 to send multi-access information and deletes the multi-used user ID and its network information from the network information storage unit 304. That is, the transmitted information in unregistered network information is canceled by the filter unit 306 to be discussed later, thus disconnecting the connection to the terminal 13 with the multi-used user ID.

When the registration unit 302 detects a multi-access, the multi-access information transmitting unit 303 generates multi-access information and sends it to the authentication server 11.
That is, multi-access information including the user ID whose multi-access has been detected is sent to the authentication server 11.

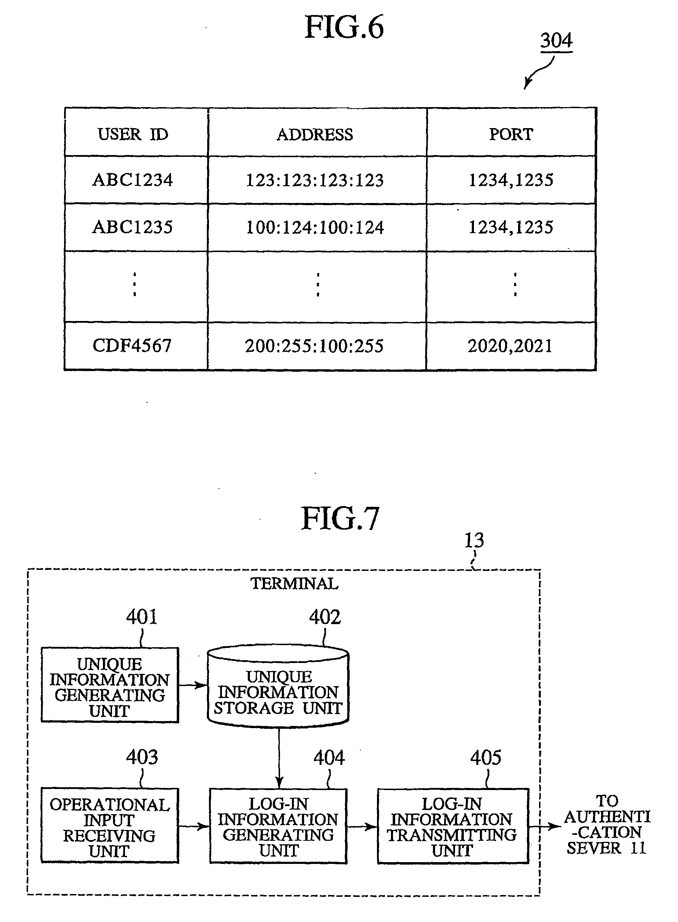

The network information storage unit 304 stores network information or the like registered by the registration unit 302.
For example, the network information storage unit 304 stores information having an user ID as shown in FIG. 6 associated with network information (IP address and port or the like).
In a case where, for example, the user has finished the game and logged out or the terminal 13 has not responded to a reply request from the game server 12 for a given time or longer, the target network information or the like is adequately deleted from the network information storage unit 304. That is, the network information or the like of the terminal 13 which is currently accessing the game server 12 is stored in the network information storage unit 304.

Returning to FIG. 5, when the registration unit 302 detects a multi-access, the warning information transmitting unit 305 sends warning information to both terminals 13 based on individual network information of the multi-used user ID.
That is, as a multi-access (simultaneous access) with the same user ID occurs which is a possible unauthorized use, the warning information transmitting unit 305 generates warning information including a message indicating, for example, that the access will be disconnected, and sends the warning information to both terminals 13.

The filter unit 306 filters information sent from the individual terminals 13 or the like based on the network information or the like stored in the network information storage unit 304.
For example, the filter unit 306 relays only information (packets or the like) having registered network information ((IP address and port) shown in FIG. 6 added to the header and supplies the information to the game processor 307. That is, in a case of information sent from the sender of the registered network information (the terminal 13 of the authenticated user), the filter unit 306 passes the information to supply it to the game processor 307.
In a case of information sent from the sender of unregistered network information, on the other hand, the filter unit 306 cancels the information unpassed.

The game processor 307 performs a predetermined game process according to the information supplied from the filter unit 306. That is, the game processor 307 progresses the on-line game (controls the progress of the game) according to instruction information or the like sent from the terminal 13 of the authenticated user.
When receiving a log-out instruction or the like from the terminal 13 of the user, the game processor 307 performs a predetermined log-out process, and deletes the target user ID and network information from the network information storage unit 304.

The game information transmitting unit 308 transmits game information needed according to the game processor the like to the terminal 13 under the control of the game processor 307.
That is, the game information transmitting unit 308 adequately transmits various kinds of game information to the target terminal 13 according to the progress of the game.

### (Schematic Configuration of Terminal)

FIG. 7 is an exemplary diagram illustrating the schematic configuration of the terminal 13 (the above-described game device 100) according to the embodiment. A description will be given below referring to this diagram.

The terminal 13 has a unique information generating unit 401, a unique information storage unit 402, an operational input receiving unit 403, a log-in information generating unit 404 and a log-in information transmitting unit 405.

The unique information generating unit 401 generates unique unique information to identify (distinguish) the local terminal 13.
For example, the unique information generating unit 401 reads (or receives, via the operational input receiving unit 403,) the product key (or serial number or the like) of the game program to be executed (game program stored on the DVD-ROM loaded into the DVD-ROM drive 107), acquires the MAC address (specific physical address of the NIC 110), and adequately combines them to generate unique information. At the time of generating unique information, encryption may be done by a predetermined encryption scheme.
The CPU 101 can function as such a unique information generating unit 401.

When the terminal 13 is a general computer, a product key, date information (installation date) and MAC address may be combined adequately to generate unique information at the time of installing a game program, for example. In this case, with the same terminal 13, different unique information is generated every time installation is performed.
The aforementioned information included in unique information is just one example, and any other unique information for each terminal 13 (each installation) can be used as needed.

The unique information storage unit 402 stores unique information generated by the unique information generating unit 401. For example, the unique information storage unit 402 stores unique information including a product key and MAC address or the like.
The external memory 106 or the like can function as such a unique information storage unit 402.

The operational input receiving unit 403 receives inputs of a user ID and password or the like at the time the terminal 13 connects to the authentication server 11 and requests a log-in to the game server 12. That is, the operational input receiving unit 403 receives the user ID and password input by the user.
After the user or the like is authenticated (log-in is permitted) and the terminal 13 is connected to the game server 12, the operational input receiving unit 403 receives instruction information or the like needed in the network game or a log-out instruction or the like.
The controller 105 can function as such an operational input receiving unit 403.

When the operational input receiving unit 403 receives the user ID and password, the log-in information generating unit 404 reads unique information from the unique information storage unit 402 and generates log-in information from those information.
For example, the log-in information generating unit 404 generates log-in information having unique information added to the user ID and password.
The CPU 101 can function as such a log-in information generating unit 404.

The log-in information transmitting unit 405 sends the log-in information generated by the log-in information generating unit 404 to the authentication server 11.
That is, to receive authentication of the user or the like, the log-in information transmitting unit 405 sends log-in information including the user ID, the password and the unique information to the authentication server 11.
The NIC 110 can function as such a log-in information transmitting unit 405.

The terminal 13 has an unillustrated display unit, and displays information sent from the authentication server 11, images of the on-line game (including information or the like sent from the game server 12), etc. on the display unit.

### (Outline of Operation At Log-in Time)

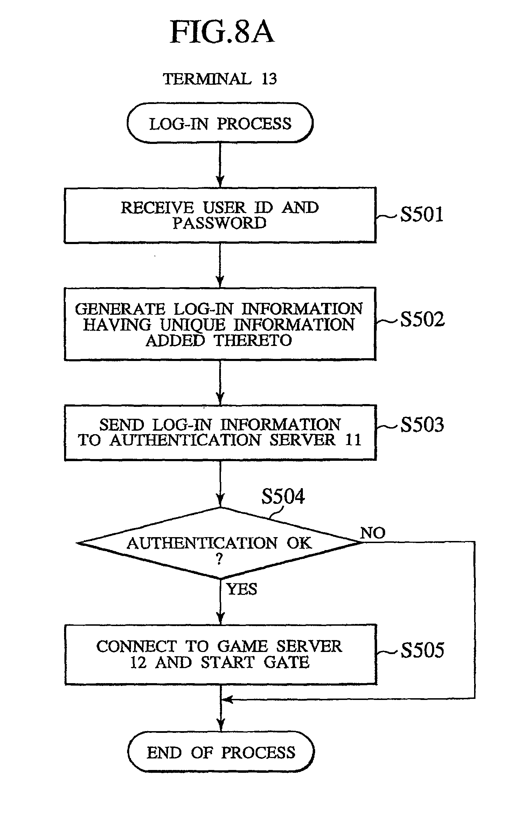

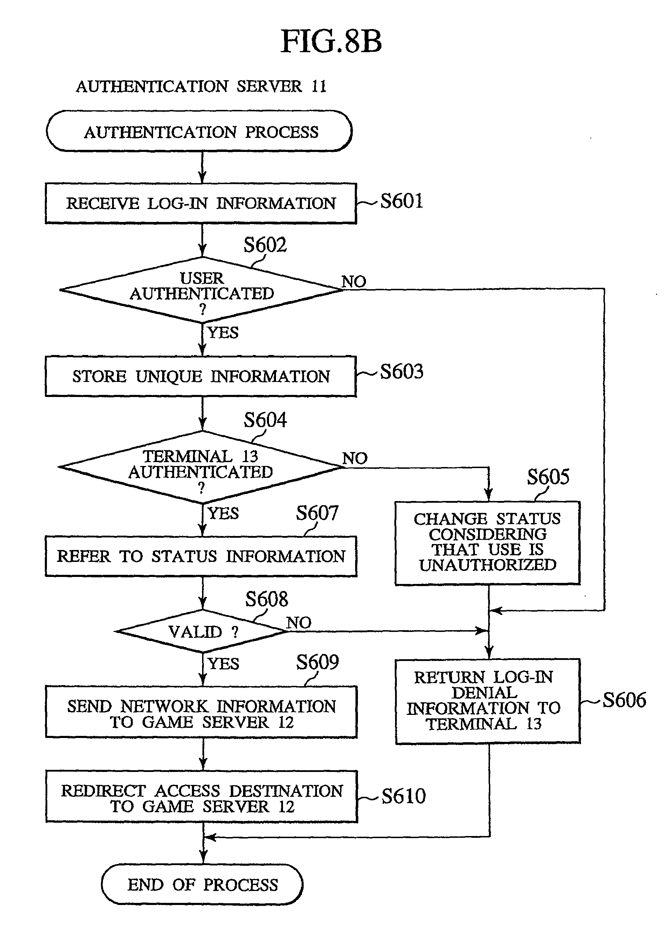

FIG. 8A is a flowchart illustrating the flow of a log-in process that is executed by the terminal 13. FIG. 8B is a flowchart illustrating the flow of an authentication process that is executed by the authentication server 11. Referring to those diagrams, the operations of the terminal 13 and the authentication server 11 at the log-in time will be described.
It is assumed that unique information (product key and MAC address or the like) is stored in the unique information storage unit 402 of the terminal 13 at the start of those processes. It is assumed that authentication information (user ID and password or the like) of an authorized user is stored in the authentication information storage unit 201 of the authentication server 11, and status information is adequately stored in the status information storage unit 206.

First, when connected to the authentication server 11, the terminal 13 displays a predetermined input screen on the display unit or the like, and receives a user ID and password input (step S501). That is, the operational input receiving unit 403 receives the user ID and password input by the user.

The terminal 13 generates log-in information having unique information added to the received user ID or the like (step S502). That is, the log-in information generating unit 404 reads unique information (product key and MAC address or the like) from the unique information storage unit 402, and adds the unique information to the user ID and password or the like received by the operational input receiving unit 403, thereby generating log-in information.

The terminal 13 sends the log-in information to the authentication server 11 (step S503). That is, the log-in information transmitting unit 405 sends the log-in information generated by the log-in information generating unit 404 to the authentication server 11.

In response thereto, the authentication server 11 receives the log-in information sent from the terminal 13 (step S601). That is, the log-in information receiving unit 203 receives the log-in information including the user ID, password and unique information.

The authentication server 11 determines whether or not to authenticate the user based on the received log-in information (user ID and password) (step S602).
That is, when the set of the user ID and password received by the log-in information receiving unit 203 matches with any set of a user ID and password in the authentication information stored in the authentication information storage unit 201, the user authentication unit 204 authenticates the user. When there is no match, on the other hand, the user authentication unit 204 does not authenticate the user.

When the user is not authenticated (step S602; No), the authentication server 11 proceeds the process to step S606 to be described later.
When the user is authenticated (step S602; Yes), on the other hand, the authentication server 11 additionally stores the unique information included in the log-in information into the historical information storage unit 202 (step S603).
When the unique information of the terminal 13 is already stored, the user authentication unit 204 does not store the unique information, and leaves only different unique information as a history as shown in FIG. 4B.

The authentication server 11 determines whether or not to authenticate the terminal 13 based on the historical information (step S604). When the unique information in the historical information has not amounted to ten pieces (when different pieces of unique information are less than ten pieces), for example, the terminal authentication unit 205 authenticates the terminal 13.
When different pieces of unique information have amounted to ten pieces, on the other hand, the terminal authentication unit 205 detects an unauthorized use by a third party, and does not authenticate the terminal 13.

When the terminal 13 is not authenticated (step S604; No), the authentication server 11 considers the event as an unauthorized use and changes status information (step S605). That is, when the terminal authentication unit 205 detects an unauthorized use by a third party, the log-in determining unit 207 sets "password change needed" to the target status information to be stored in the status information storage unit 206.

Then, the authentication server 11 returns log-in denial information to the terminal 13 (step S606). That is, when log-in is denied by the log-in determining unit 207, the propriety information transmitting unit 208 returns predetermined log-in denial information to the terminal 13.
When an unauthorized use by a third party is detected and the terminal 13 is not authenticated, for example, the propriety information transmitting unit 208 sends the terminal 13 log-in denial information including a message such that because of an unauthorized use detected, the user ID will be stopped until the password is changed.
When the user is not authenticated in the step S602, the propriety information transmitting unit 208 sends the terminal 13 log-in denial information including a message such that the password or the like differs.

Even when the terminal 13 is authenticated in the step S604 (step S604; Yes), the authentication server 11 refers to the status information (step S607). That is, even when the user is authenticated and the terminal 13 is authenticated, the log-in determining unit 207 finally determines whether or not to permit log-in by referring to the status information.

The authentication server 11 determines whether or not the status of the user in the referred status information (status information of the target user ID) is valid (step S608). When the status of the user is set to "normal" in the status information shown in FIG. 4C, and when the inhibition time has passed even if the status is set to "multi-access", the log-in determining unit 207 determines that the status of the user is valid. When the inhibition time has not been passed and the status is set to "password change needed", however, it is determined that the status is invalid (is not valid).

When determining that the user is invalid (step S608; No), the authentication server 11 proceeds to the step S606 and returns log-in denial information to the terminal 13.
When determining that the user is valid (step S608; Yes), on the other hand, the authentication server 11 sends network information or the like to the game server 12 (step S609). That is, the network information transmitting unit 209 sends network information terminal 13 That is, network information, such as the IP address and port or the like of the authenticated terminal 13 to the game server 12 together with the authenticated user ID.

Then, the authentication server 11 finally permits log-in and switches the access destination of the terminal 13 to the game server 12 (step 5610). That is, the propriety information transmitting unit 208 returns log-in permission information to the terminal 13, and switches the access destination of the terminal 13 to the game server 12.

The terminal 13 determines whether or not log-in has been permitted (authentication is OK) (step S504). That is, the terminal 13 determines that it is authenticated when the log-in permission information is returned from the authentication server 11, and determines that it is not authenticated when the log-in permission information is not returned.

When determining that the terminal 13 is authenticated (step S504; Yes), the terminal 13 connects to the switched game server 12 and starts the game (step S505). When determining that the terminal 13 is not authenticated (step S504; No), the terminal 13 terminates the log-in process directly, displaying the contents of the log-in denial information or the like.

In this manner, different pieces of unique information are stored as a history in the historical information storage unit 202 of the authentication server 11. When the different pieces of unique information have amounted to different pieces of unique information have amounted to ten pieces, for example, the terminal authentication unit 205 detects that an unauthorized use by a third party has occurred. That is, when the user ID and password or the like are leaked and are used by unspecified multiple persons, the terminals 13 to be used are quite different from one another, so that their pieces of unique information differ from one another. This makes it possible to detects an unauthorized use from such unnatural historical information.
There may be a case where an authorized user uses a plurality of terminals 13, even in which case the quantity should not be amounted to ten pieces within the range of personal use, so that an unauthorized use cannot be detected and the terminal 13 is authenticated by the terminal authentication unit 205. That is, accesses from different terminal devices by the authorized user become possible.
Even when the user is authenticated and the terminal 13 is authenticated, it is finally determined whether or not to permit log-in by referring to the status information stored in the status information storage unit 206. It is therefore possible to adequately inhibit log-in or the like during the inhibition time when a multi-access to be described later is detected.

As a result, it is possible to adequately prevent an unauthorized use by a third party while enhancing the flexibility of authorized users.

### (Outline of Operation of Detecting Multi-access)

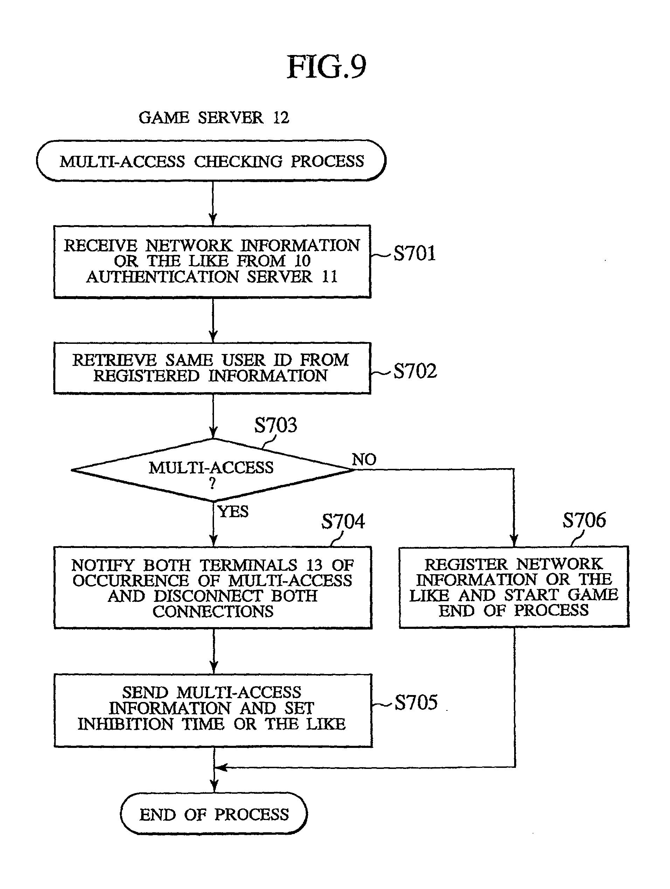

FIG. 9 is a flowchart illustrating the flow of a multi-access checking process that is executed by the game server 12 with the above-described configuration. An operation of detecting a multi-access will be described hereinbelow referring to the diagram. The multi-access checking process is initiated when the authentication server 11 sends out the network information or the like of the authenticated terminal 13 in the authentication process (step S609).

First, the game server 12 receives network information or the like (step S701). That is, the network information receiving unit 301 receives information including the IP address and port of the terminal 13 used by the user authenticated by the authentication server 11 and the user ID of that user.

The game server 12 attempts to retrieve the same user ID from the network information storage unit 304 (step S702). That is, the registration unit 302 retries network information (user ID) registered in the network information storage unit 304 using the received user ID as a key.

The game server 12 determines whether or not the user ID is present multiple times (step 5703). That is, the registration unit 302 determines whether or not the same user ID has been retrieved from the network information storage unit 304.

When multi-presence of the user ID is detected (step S703; Yes), the game server 12 notifies both terminals 13 of the occurrence of a multi-access and both accesses are disconnected (step S704). That is, the warning information transmitting unit 305 sends warning information to both terminals 13 based on the individual pieces of network information of the multi-present user ID. The registration unit 302 deletes the multi-accessing user ID and information corresponding thereto from the network information storage unit 304. Accordingly, the network information of both terminals 13 are deleted and those pieces of transmission information are canceled by the filter unit 306, thereby disconnecting the connection to the multi-accessing terminals 13.

Then, the game server 12 generates and sends multi-access information to the authentication server 11 (step S705). That is, the multi-access information transmitting unit 303 sends the authentication server 11 multi-access information including the user ID whose multi-access has been detected.
In response to the movement input unit, the authentication server 11 sets the inhibition time or the like. That is, the multi-access information receiving unit 210 of the authentication server 11 receives the transmitted multi-access information, and the inhibition time setting unit 211 sets information, such as "multi-access", inhibition time and multi-access number, to the status information (status information of the target user ID) shown in FIG. 4C based on the multi-access information. At this time, the inhibition time according to the multi-access number is set.

When it is determined in the step S703 that there is no multi-presence of the user ID (step S703; No), the game server 12 registers network information or the like, and accepts an access from the target terminal 13 (step S706). That is, the registration unit 302 registers the network information or the like of the authenticated terminal 13 in the network information storage unit 304. Thereafter, as the filter unit 306 passes the instruction information or the like sent from the authenticated terminal 13 the game processor 307 progresses the on-line game according to the instruction information or the like.

In the above manner, the game server 12 adequately registers network information or the like while detecting a multi-access (multiple registration) with the user ID of the authenticated user. When detecting a multi-access with the same user ID, connection to both terminals 13 is disconnected immediately. Then, multi-access information is set to the authentication server 11 to set the inhibition time or the like. This can prevent an unauthorized use adequately.

### (Other Embodiments)

The foregoing description of the embodiment has been given of the case where plural pieces of unique information are stored in the historical information storage unit 202 of the authentication server 11 for each user, and an unauthorized use by a third party is detected when different pieces of unique information have amounted to ten pieces.
However, the number of pieces of unique information to be the reference for detecting an unauthorized use is not limited to ten, but can be defined adequately as long as the number exceeds the range of personal usage.
Although different pieces of unique information are stored in the historical information storage unit 202 in the embodiment, plural pieces of unique information may be stored in order. When latest ten pieces of unique information are all different from one another, an unauthorized use by a third party may be detected.
That is, the historical information storage unit 202 stores the history of unique information (historical information) of the authenticated terminal 13 in order. Then, the terminal authentication unit 205 performs authentication of the terminal 13 based on the history of the unique information of the user stored in the historical information storage unit 202.
For example; the terminal authentication unit 205 compares the latest ten pieces of unique information (history corresponding to the user ID) with one another, and authenticates the terminal 13 not only when all the pieces of unique information match with one another but also when some of the pieces of unique information, if not all, have a match.
When all the latest ten pieces of unique information are different from one another, on the other hand, the terminal authentication unit 205 detects an unauthorized use by a third party and does not authenticate the terminal 13.
In this case, it is also possible to adequately prevent an unauthorized use by a third party while enhancing the flexibility of authorized users.

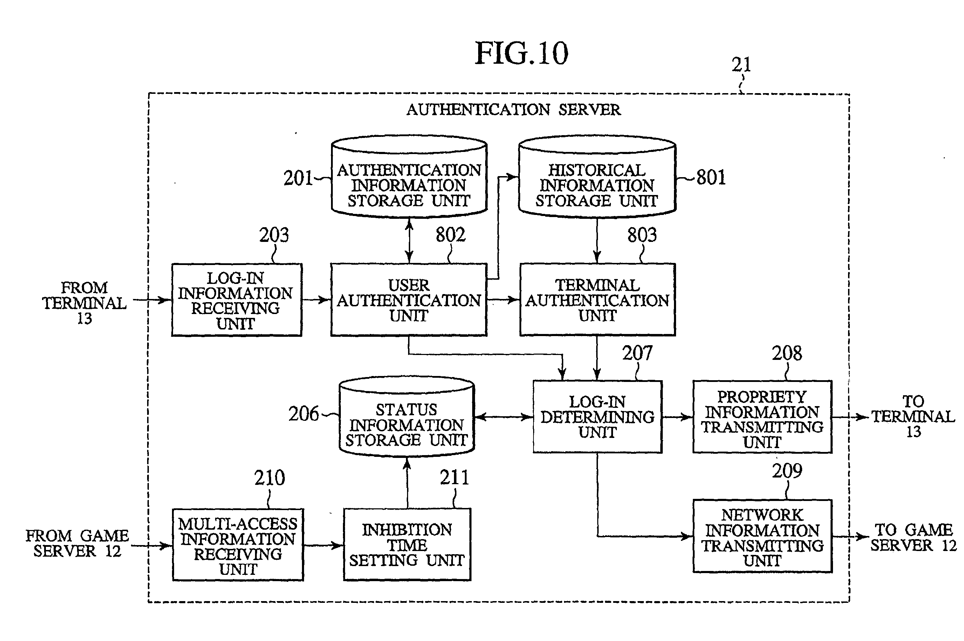

Although the foregoing description of the embodiment has been given of the case of collecting unique information for each user ID, unique information may be collected for each product key. In this case, it is possible to cope with a case where the same product key is used by a plurality of users.
An authentication server 21 which collects unique information for each product key will be described referring to FIG. 10.
FIG. 10 is an exemplary diagram illustrating the schematic configuration of the authentication server 21 according to another embodiment of the present invention. A description will be given hereinbelow referring to the diagram.

The authentication server 21 has an authentication information storage unit 201, a log-in information receiving unit 203, a status information storage unit 206, a log-in determining unit 207, a propriety information transmitting unit 208, a network information transmitting unit 209, a multi-access information receiving unit 210, an inhibition time setting unit 211, a historical information storage unit 801, a user authentication unit 802, and a terminal authentication unit 803.
The authentication server 21 structurally differs from the authentication server 11 in FIG. 3 in the historical information storage unit 801, the user authentication unit 802 and the terminal authentication unit 803.

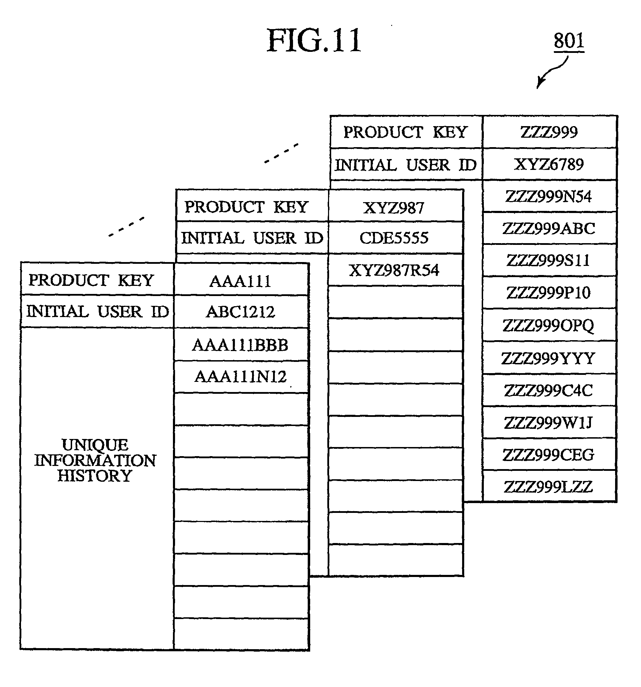

The historical information storage unit 801 stores the history (historical information) of unique information of the authenticated terminal 13 for each product key.
For example, a product key included in unique information is referred to, and unique information is collected for each product key in the historical information storage unit 801 as shown in FIG. 11. As illustrated, such plural pieces of unique information are adequately stored in the historical information storage unit 801.
The initial user ID in the diagram indicates the ID of the first user who has logged in using the product key (who has exercised the right of the product key first).

The user authentication unit 802, like the user authentication unit 204 in FIG. 3, first adequately compares log-in information received by the log-in information receiving unit 203 with authentication information stored in the authentication information storage unit 201 to perform authentication of the user.
Then, the user authentication unit 802 additionally stores unique information into the historical information storage unit 801 in FIG. 11 while checking the user ID. That is, the user authentication unit 802 additionally stores unique information in association with the product key in the historical information storage unit 801 only when the currently authenticated user ID is the same as the initial user ID of the corresponding product key stored in the historical information storage unit 801.
Specifically, first, the user authentication unit 802 extracts unique information from the authenticated log-in information and reads the initial user ID (initial user ID registered in the same product key) from the historical information storage unit 801 based on the product key included in the unique information. Then, the user authentication unit 802 discriminates whether the read initial user ID matches with the authenticated user ID. When both IDs do not match with each other, the user authentication unit 802 considers that the same product key is used by another user, and notifies the log-in determining unit 207 of that effect.
When both IDs match with each other, on the other hand, the user authentication unit 802 stores the unique information included in the log-in information into the historical information storage unit 801. Unique information identical to the stored unique information is not stored, and only different unique information is left as a history. That is, unique information different for each product key is stored as a history in the historical information storage unit 801.
When the product key is used first, information of the product key (initial user ID and unique information or the like) is not stored in the historical information storage unit 801, so that a new initial user ID and unique information or the like are stored therein.

When the user is authenticated and the initial user ID matches with the authenticated user ID, the terminal authentication unit 803 performs authentication of the terminal 13 based on unique information corresponding to the same product key stored in the historical information storage unit 801.
When the amount of unique information (history corresponding to the product key) shown in FIG. 11 has not amounted to ten pieces, the terminal authentication unit 803 authenticate the terminal 13. That is, when different pieces of unique information have not amounted to ten pieces, the terminal 13 is authenticated.
When different pieces of unique information have amounted to ten pieces, on the other hand, the terminal authentication unit 803 detects occurrence of an unauthorized use by a third party, and does not authenticate the terminal 13.
That is, when the product key and user ID or the like are leaked and are used by unspecified multiple persons, the terminals 13 to be used are quite different from one another, so that pieces of unique information generally differ from one another even with the same product key. In this respect, an unauthorized use is detected from the history of such unique information.
Because it is very unnatural for an authorized user to use ten terminals 13 switching from one to another as mentioned above, the terminal authentication unit 803 can detect an unauthorized use by a third party from such unnatural historical information.

Even when the same product key is used by a plurality of users, therefore, the authentication server 21 shown in FIG. 10 can detect an unauthorized use by a third party by collecting unique information for each product key.

Although the foregoing description of the embodiment has been given of the case where a user uses a terminal 13 or the like the user owns, the embodiment can be adequately adapted to a case where an arbitrary user is allowed to use a terminal 13 or the like a predetermined dealer has.
An example of the case is a case where multiple terminals 13 are disposed in a shop, such as a so-called Internet cafe or a comics cafe, and a game program (game program or the like recorded on a DVD-ROM to be loaded into the DVD-ROM drive 107) owned by the shop (dealer) is rented to a user and is executed on any of the terminals 13.
In this case, however, the number of terminals 13 to be disposed in the shop amounts to several tens, the aforementioned unique information of the terminals 13 cannot be used. That is, when users sequentially use arbitrary terminals 13 in the shop, more than ten pieces of unique information in the shop alone will be sent to the authentication server 11, 21 eventually.
It is therefore necessary to make an agreement with a dealer and then send unique information to identify (distinguish) the shop to the authentication server 11, 21 from a terminal 13 in the shop.

That is, unlike in the above-described case, the unique information generating unit 401 of the terminal 13 placed in the shop generates unique information to identify the shop. For example, the unique information generating unit 401 reads the product key of the game program to be executed, acquires the MAC address of the router located in the shop or the like, and adequately combined them to generate unique information.
Besides the router, the gateway's device unique information may be acquired to generate unique information. Further, a global address assigned to a router or the like may be acquired to generate unique information.
When the user's log-in operation is performed, the terminal 13 generates log-in information including unique information for each shop generated in this way is generated and sent to the authentication server 11,21.

In this case, because unique information to identify the shop is generated from a single router or the like (several at most) located in the shop, the unique information for each shop is sent to the authentication server 11, 21 even when any terminal 13 in the shop is used by the user.
In addition, pieces of unique information of all the terminals 13 in the shop may be grouped to be considered as the same terminal 13, so that even when any terminal 13 is used by the user, the same unique information is sent to the authentication server 11, 21.

Although the foregoing description of the embodiment has been given mainly of the case where the terminal 13 is the game device 100, a game program is installed when the terminal 13 is a general computer as mentioned above. Then, as the game program is executed, the terminal 13 connects the network to perform the aforementioned authentication.
The case where the terminal 13 connects to the network every time the game program is executed may not be adequate because, for example, the communication fee may be needed every time depending on the environment of the user.
In this respect, the terminal 13 may connect to the network to perform authentication, not every time, but only when a predetermined condition or the like is fulfilled.

For example, the terminal 13 may store the number of activations after authentication, so that only when the activation number exceeds a prescribed number, authentication is executed, or a next authentication period may be stored after authentication, so that only when the authentication period passes, authentication is executed.
In addition, authentication may be executed at a given probability provided by a random number.

The foregoing description of the embodiment has been given of the case
where the game server 12 detects a multi-access (multiple registration) with the same user ID. This is carried out to reduce the process load or the like of the authentication server 11, 21 as much as possible.
However, the authentication server 11, 21 may detect a multi-access (multiple registration) with the user ID.
For example, the authentication server 11, 21 sets the status "logged in currently" in the status information storage unit 206, and the log-in determining unit 207 does not permit log-in when "logged in currently" is set at the time of referring to the status information.
In a case where, for example, the user has finished the game and logged out or the terminal 13 has not responded to a reply request from the game server 12 for a given time or longer, the game server 12 sends log-out information to the authentication server 11, 21. Then, the authentication server 11, 21 changes the status information to "normal" from "logged in currently".
This can allow the authentication server 11, 21 to detect a multi-access (multiple registration) with the user ID.

The foregoing description of the embodiment has been given of the case where the authentication server 11 (authentication server 21) has the status information storage unit 206 or the like and manages the status information or the like of users.
To further reduce the process load or the like on the authentication server 11, the status information or the like may not be managed there. At that time, encrypted data may be sent to the game server 12, so that a multi-access is checked depending on whether or not decryption is needed on the game server 12.
A description will be given below of an authentication server 31 which ensures further reduction of the process load or the like and a game server 32 which executes decryption of encrypted data.

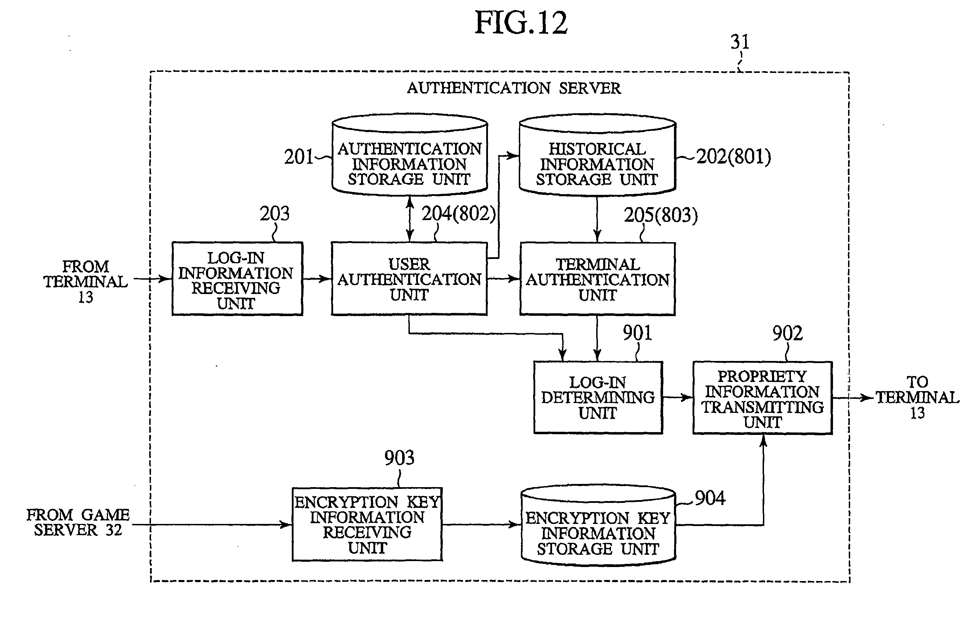

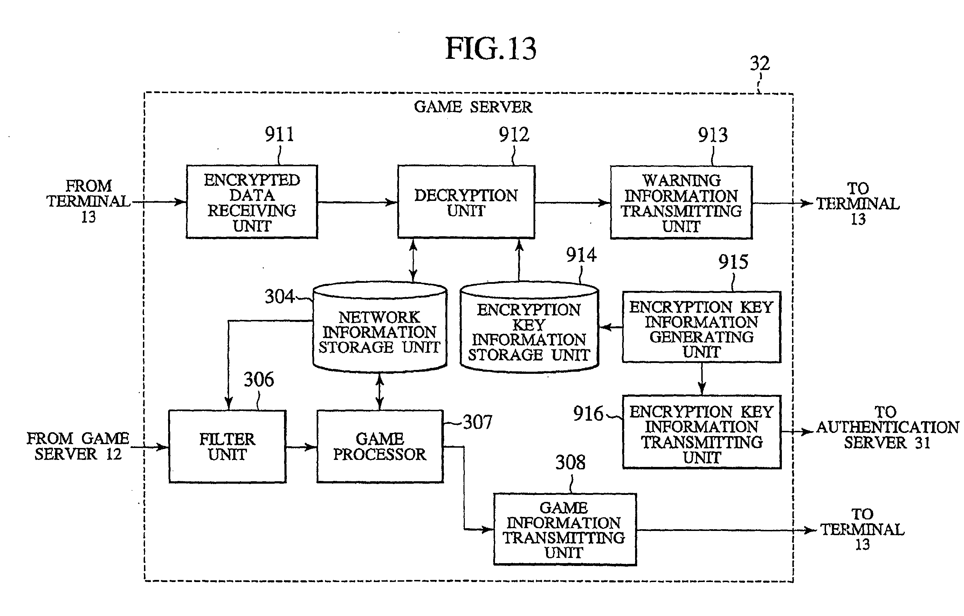

FIG. 12 is an exemplary diagram illustrating the schematic configuration of the authentication server 31 according to a further embodiment of the present invention. FIG. 13 is an exemplary diagram illustrating the schematic configuration of the game server 32 according to another embodiment of the present invention.

First, the authentication server 31 will be described referring to FIG. 12.
The authentication server 31 has an authentication information storage unit 201, a historical information storage unit 202 (801), a log-in information receiving unit 203, a user authentication unit 204 (802), a terminal authentication unit 205 (803), a log-in determining unit 901, a propriety information transmitting unit 902, an encryption key information receiving unit 903, and an encryption key information storage unit 904.
The authentication server 31 structurally differs from the authentication server 11 in FIG. 3 (authentication server 21 in FIG. 10) in the log-in determining unit 901 and the propriety information transmitting unit 902, and has the encryption key information receiving unit 903 and the encryption key information storage unit 904 in place of the status information storage unit 206, the network information transmitting unit 209, the multi-access information receiving unit 210 and the inhibition time setting unit 211.

The log-in determining unit 901 finally determines if log-in is appropriate based on the results of authentication from the user authentication unit 204 and the terminal authentication unit 205.
That is, the log-in determining unit 901 permits log-in when the user is authenticated by the user authentication unit 204 and the terminal is authenticated by the terminal authentication unit 205. When the user is authenticated by the user authentication unit 204 or when the terminal is authenticated by the terminal authentication unit 205, log-in is denied.

The propriety information transmitting unit 902 sends the terminal 13 information indicating propriety of log-in based on the result of determination from the log-in determining unit 901.
For example, when the log-in determining unit 901 permits log-in, the propriety information transmitting unit 902 returns log-in permission information including encrypted authentication data to the terminal 13 and switches the access destination of the terminal 13 to the game server 32.
Specifically, the propriety information transmitting unit 902 encrypts the user ID and unique information using encryption key stored in the encryption key information storage unit 904 to generate encrypted authentication data. Then, the propriety information transmitting unit 902 returns log-in permission information including the generated encrypted authentication data to the terminal 13.
The encrypted authentication data is simply relayed by the terminal 13, and is sent to the game server 32 from the terminal 13 when the terminal 13 connects to the game server 32.

The encryption key information receiving unit 903 receives encryption key information which is sent from the game server 32 at a predetermined update timing. That is, the encryption key information receiving unit 903 receives encryption key information sent from the game server 32 at the time of updating the encryption key.
At the time of updating (changing) the encryption key, generally, public key encryption is safer than a common key encryption, so that a public key may be used for encryption key information.

The encryption key information storage unit 904 stores the encryption key information received by the encryption key information receiving unit 903. The encryption key information storage unit 904 may delete old encryption key information or may leave it as expired encryption key information.

Next, the game server 32 will be explained referring to FIG. 13.
The game server 32 has an encrypted data receiving unit 911, a decryption unit 912, a network information storage unit 304, a warning information transmitting unit 913, a filter unit 306, a game processor 307, a game information transmitting unit 308, an encryption key information storage unit 914, an encryption key information generating unit 915, and an encryption key information transmitting unit 916.
The game server 32 structurally differs from the game server 12 in FIG. 5 in the warning information transmitting unit 913, and has the encrypted data receiving unit 911, the decryption unit 912, the encryption key information storage unit 914, the encryption key information generating unit 915 and the encryption key information transmitting unit 916 in place of the network information receiving unit 301, the registration unit 302 and the multi-access information transmitting unit 303.

The encrypted data receiving unit 911 receives encrypted authentication data relayed from the terminal 13 authenticated by the authentication server 31. That is, the encrypted data receiving unit 911 receives encrypted authentication data having the user ID and unique information encrypted by the encryption key information of the authentication server 31.

The decryption unit 912 decrypts encrypted authentication data received by the encrypted data receiving unit 911. Specifically, the decryption unit 912 attempts to decrypt the encrypted authentication data using the encryption key information stored in the encryption key information storage unit 914 (the same as the encryption key information of the authentication server 31).
When decryption is not carried out properly, the decryption unit 912 determines that the terminal 13 is the one authenticated by the authentication server 31, and does not permit an access to the game server 32. When decryption is carried out properly, on the other hand, the decryption unit 912 determines that the terminal 13 is the one authenticated by the authentication server 31, registers network information or the like in the network information storage unit 304, and permits an access to the game server 32.
As will be described later, the encryption key information transmitting unit 916 sends new encryption key information to the authentication server 31 for key change in which case an old encryption key may be used by the authentication server 31 due to a time lag generated at the time of transmission. To cope with such a case, an attempt may be made to decrypt the encrypted authentication data using the old encryption key information for a predetermined period after transmission of new encryption key information to the authentication server 31 from the encryption key information transmitting unit 916 even when new cannot be received. In this case, while the valid period of old encryption key information is substantially extended, a time-lag originated problem can be prevented.
The decryption unit 912, like the registration unit 302 in FIG. 5, stores the user ID and network information in the network information storage unit 304 in association with each other. At that time, the decryption unit 912 verifies if there is no multi-presence of the user ID to try detecting a multi-access. When detecting a multi-access, the decryption unit 912 supplies both network information or the like to the warning information transmitting unit 913, and deletes the multi-accessing user ID and network information thereof from the network information storage unit 304.

When a multi-access is detected by the decryption unit 912, the warning information transmitting unit 913, like the warning information transmitting unit 305 in FIG. 5, sends warning information to both terminals 13 based on the individual network information of the multi-accessing user ID.

The encryption key information storage unit 914 stores the encryption key information generated by the encryption key information generating unit 915. To cope with the time lag at the time of key change, the encryption key information storage unit 914 may hold expired encryption key information for a predetermined period.

The encryption key information generating unit 915 generates encryption key information to be used in encryption or decryption. The encryption key information generating unit 915 may generate encryption key information by a common key encryption system or by a public key encryption system.
The encryption key information generating unit 915 stores the generated encryption key information in the encryption key information storage unit 914 or sends it to the authentication server 31 via the encryption key information transmitting unit 916.

The encryption key information transmitting unit 916 acquires new encryption key information from the encryption key information generating unit 915 at the time of updating (changing) the encryption key, and sends the encryption key information to the authentication server 31.
The update of the encryption key is executed against a so-called replay attack. The replay attack is to get information (encrypted authentication data or the like) which has been authenticated successfully by the authentication server 31 by somehow and resend it to the game server 32 to sneak out the authentication by the authentication server 31.
To cope with such a replay attack, the encryption key information transmitting unit 916 sends encryption key information to be used newly to the authentication server 31 at a predetermined update timing.
That is, after transmission of new encryption key information, the decryption unit 912 attempts to decrypt encrypted authentication data using the new encryption key information (the same encryption key information as is stored in the encryption key information storage unit 914), and can eliminate the encrypted authentication data encrypted with the old encryption key information.

As the authentication server 31 shown in FIG. 12 has only to return the authentication result to the terminal 13 each time, the process load or the like can be further reduced. The game server 32 shown in FIG. 13 can discriminate if the terminal 13 has been authenticated depending on whether or not encrypted authentication data can be decrypted properly, and can cope with a replay attack by adequately updating encryption key information.

Although the foregoing description of the embodiment has been given of the case where a replay attack is coped with by adequately updating encryption key information, a more severe countermeasure may be taken against a replay attack.
For example, the authentication server 31 (propriety information transmitting unit 902) generates a random number R every time it authenticates the terminal 13, and embeds the random number R in encrypted authentication data. That is, encrypted authentication data is made to differ every time.
When receiving the encrypted authentication data relayed by the terminal 13, the game server 32 (decryption unit 912) attempts decryption thereof, and inquires the authentication server 31 if the set of the user ID and the random number R has been issued normally when decryption is done. When normal issuance is confirmed, the random number R is erased.
The encrypted authentication data may be sent, without being decrypted by the game server 32, to the authentication server 31 which performs decryption and checks the random number R or the like. While the random number R is used, the value may not be a random number if it is difficult to imagine the value from the previous value.

Further, in addition to the aforementioned schemes, the terminal 13 may send terminal encryption key information to the authentication server 31 at the time of authenticate the user, so that encrypted authentication data is encrypted (or electronically signed) with the terminal encryption key information at the time of sending the encrypted authentication data to the game server 32 from the terminal 13.
In this case, the game server 32 receives the terminal encryption key information from the authentication server 31 and checks the encrypted authentication data.
The encrypted authentication data may be sent, without being decrypted by the game server 32, to the authentication server 31 which performs decryption or the like.

In those cases, a more severe countermeasure can be taken against a replay attack.

Although the foregoing description of the embodiment has been given of the case where the terminal 13 connects to the game server 12 (game server 32) to play a network game, the connecting destination of the terminal 13 is not limited to the game server 12 but may be another content server.

The present invention claims the priority based on Japanese Patent Application No. 2005-015505 the entire contents of which are incorporated herein by reference.

### Industrial Applicability

As described above, the present invention can provide a network system, a server device, an unauthorized use detecting method, a recording medium and a program which are suitable for adequately preventing an unauthorized use by a third party while enhancing the flexibility of authorized users.

## Claims

1. A network system in which a terminal device to be used by a user and a server device that authenticates the terminal device are connected together in a communicatable manner, the terminal device comprising:
a unique information storage unit that stores unique information for identifying at least the local terminal device;
an information accepting unit that accepts to-be-authenticated information to be used in authenticating the user;
a request information generating unit that generates access request information including the accepted to-be-authenticated information and the stored unique information;
a request information transmitting unit that transmits the generated access request information to the server device; and
the server device comprising:
an authentication information storage unit that prestores authentication information for authenticating the user;
a history storage unit that stores a history of plural pieces of unique information in association with the user;
a request information receiving unit that receives the access request information sent from the terminal device;
a user authentication unit that authenticates the user based on a relationship between the to-be-authenticated information included in the received access request information and the stored authentication information;
a history update unit that adds the unique information included in the authenticated access request information of the user to the stored authentication information and stores resultant information;
an unauthorized use detecting unit that detects an unauthorized use based on the history of the unique information stored in association with the user; and
an access permission unit that permits access made by the authenticated user from the terminal device when the unauthorized use is not detected.

2. The network system according to claim 1, wherein the terminal device further includes a unique information generating unit that generates unique information based on at least specific information presented to the user beforehand and predetermined hardware information of the local terminal device, and
the unique information storage unit stores the unique information generated before accessing the server device.

3. The network system according to claim 1, wherein in the server device, the history storage unit stores different pieces of unique information user by user, and
the unauthorized use detecting unit detects an unauthorized use when the number of different pieces of unique information reaches a specified number.

4. The network system according to claim 1, wherein in the server device, the history storage unit stores a specified number of pieces of unique information user by user, and
the unauthorized use detecting unit detects an unauthorized use when all of the specified number of pieces of unique information different from one another.

5. The network system according to claim 1, wherein the server device further includes:
a multiple-access detecting unit that detects multiple accesses from the authenticated user; and
an access control unit that disconnects the target terminal device when the multiple accesses are detected.

6. A server device comprising:
an authentication information storage unit that prestores authentication information for authenticating a user;
a history storage unit that stores a history of plural pieces of unique information to be used in identifying at least a terminal device which is used by the user;
a request information receiving unit that receives an access request information including to-be-authenticated information and unique information and sent from terminal device;
a user authentication unit that authenticates the user based on a relationship between the to-be-authenticated information included in the received access request information and the stored authentication information;
a history update unit that adds the unique information included in the authenticated access request information of the user to the stored authentication information and stores resultant information;
an unauthorized use detecting unit that detects an unauthorized use based on the history of the unique information stored in association with the user; and
an access permission unit that permits access made by the authenticated user from the terminal device when the unauthorized use is not detected.

7. An unauthorized use detecting method using an authentication information storage unit that stores authentication information for authenticating a user, and a history storage unit that stores a history of plural pieces of unique information to be used in identifying at least a terminal device which is used by the user, the method comprising:
a request information receiving step of receiving an access request information including to-be-authenticated information and unique information and sent from terminal device;
a user authentication step of authenticating the user based on a relationship between the to-be-authenticated information included in the received access request information and the stored authentication information;
a history update step of adding the unique information included in the authenticated access request information of the user to the stored authentication information and stores resultant information;
an unauthorized use detecting step of detecting an unauthorized use based on the history of the unique information stored in association with the user; and
an access permission step of permitting access made by the authenticated user from the terminal device when the unauthorized use is not detected.

8. A recording medium recording a program that allows a computer to function as:
an authentication information storage unit that prestores authentication information for authenticating a user;
a history storage unit that stores a history of plural pieces of unique information to be used in identifying at least a terminal device which is used by the user;
a request information receiving unit that receives an access request information including to-be-authenticated information and unique information and sent from terminal device;
a user authentication unit that authenticates the user based on a relationship between the to-be-authenticated information included in the received access request information and the stored authentication information;
a history update unit that adds the unique information included in the authenticated access request information of the user to the stored authentication information and stores resultant information;
an unauthorized use detecting unit that detects an unauthorized use based on the history of the unique information stored in association with the user; and
an access permission unit that permits access made by the authenticated user from the terminal device when the unauthorized use is not detected.

9. A program that allows a computer to function as:
an authentication information storage unit that prestores authentication information for authenticating a user;
a history storage unit that stores a history of plural pieces of unique information to be used in identifying at least a terminal device which is used by the user;
a request information receiving unit that receives an access request information including to-be-authenticated information and unique information and sent from terminal device;
a user authentication unit that authenticates the user based on a relationship between the to-be-authenticated information included in the received access request information and the stored authentication information;
a history update unit that adds the unique information included in the authenticated access request information of the user to the stored authentication information and stores resultant information;
an unauthorized use detecting unit that detects an unauthorized use based on the history of the unique information stored in association with the user; and
an access permission unit that permits access made by the authenticated user from the terminal device when the unauthorized use is not detected.
